# FASCICULE DE BREVET EUROPEEN

(11) **EP 0 748 423 B1**
(45) Date de publication et mention de la délivrance du brevet: **08.03.2000**
(21) Numéro de dépôt: 95942757.6
(22) Date de dépôt: 18.12.1995
(51) Int. Cl.: F16D 48/06

(54) **DISPOSITIF DE COMMANDE POUR EMBRAYAGE DE VEHICULE AUTOMOBILE ET PROCEDE POUR LA MISE EN UVRE DE CE DISPOSITIF DE COMMANDE**
VORRICHTUNG FÜR DIE BETÄTIGUNG EINES KRAFTFAHRZEUGS UND VERFAHREN ZUM BETREIBEN DIESER VORRICHTUNG
VEHICLE CLUTCH CONTROL DEVICE AND METHOD FOR IMPLEMENTING SUCH CONTROL DEVICE

(30) Priorité: 27.12.1994 FR 9415691; 22.11.1995 FR 9513840
(43) Date de publication de la demande: 18.12.1996
(73) Titulaire: VALEO, 75017 Paris (FR)
(72) Inventeur: ARQUISCH, Eric, F-92000 Nanterre (FR); STRAGIER, Bernard, F-95400 Villiers-le-Bel (FR); HOFFMANN, Christian, F-75014 Paris (FR)
(74) Mandataire: Gamonal, Didier
(86) Numéro de dépôt international: FR9501683
(87) Numéro de publication internationale: WO9620354

(56) Documents cités:
- DE-A- 2 636 982
- DE-A- 4 138 625
- DE-A- 4 239 703
- FR-A- 1 141 137
- GB-A- 2 211 577

## Description

L'invention concerne les dispositifs de commande pour embrayage de véhicule automobile du genre comportant un actionneur relié à un récepteur par une canalisation hydraulique, avec, en dérivation sur cette canalisation hydraulique, une électrovanne de mise à la bâche contrôlant sa liaison à un réservoir de fluide hydraulique.

Dans le document FR-A-1 141 137, l'actionneur se réduit à une pompe, et, l'ensemble fonctionnant en boucle, l'électrovanne, ouverte pour la configuration d'engagement de l'embrayage, est fermée pour le passage de celui-ci en configuration de dégagement, cependant qu'un clapet élastique, interposé sur la canalisation hydraulique entre la pompe et le récepteur, assure la progressivité du retour de l'embrayage à sa configuration d'engagement.

Dans les documents FR-A-2 523 743, 2 564 920 et 2 541 793, l'actionneur comporte un piston, qui, sous le contrôle d'un moteur électrique, lui-même sous le contrôle d'une unité de pilotage, et en association avec des moyens élastiques d'assistance, est apte à intervenir sur la canalisation hydraulique le reliant au récepteur.

Lors d'une commande en dégagement de l'embrayage, le moteur électrique assure, par l'intermédiaire d'une transmission, un positionnement donné du piston de l'actionneur, et il en résulte, normalement, par l'intermédiaire de l'organe de sortie que présente à cet effet le récepteur, un positionnement convenable de la butée de débrayage à laquelle est soumis cet embrayage.

Mais, en pratique, il peut être observé, dans certaines conditions d'utilisation, une dérive entre la position de l'organe de sortie du récepteur, et donc de la butée de débrayage, par rapport à celle du piston de l'actionneur.

C'est le cas, notamment, si, sous les effets de la chaleur ambiante, le liquide intervenant dans l'ensemble du dispositif de commande est l'objet d'une certaine dilatation.

Il en est de même si, lors d'un roulage en file, il est procédé à des démarrages successifs sans que l'embrayage soit jamais complètement en configuration d'engagement.

Plus précisément l'actionneur est relié à un récepteur par une canalisation hydraulique, ledit actionneur comportant lui-même un piston, qui sous le contrôle d'un moteur électrique, lui-même sous le contrôle d'une unité de pilotage, est apte à intervenir sur cette canalisation hydraulique, avec, en dérivation sur cette canalisation hydraulique, une électrovanne de mise à la bâche contrôlant sa liaison à un réservoir de fluide hydraulique, ladite électrovanne étant normalement ouverte pour la configuration d'engagement (ou d'embrayage) de l'embrayage et fermée pour le passage de l'embrayage de sa configuration d'engagement à sa configuration de dégagement (ou de débrayage).

Le piston appartient à un émetteur hydraulique et pousse, lors du passage de la configuration d'engagement à la configuration de dégagement de l'embrayage, du liquide dans la canalisation hydraulique de longueur variable suivant le véhicule équipé.

Sur une partie fixe du véhicule, par exemple la cloche d'embrayage, est fixé le récepteur hydraulique dont la partie amont reçoit la poussée du liquide et la partie avale transmet le déplacement à une fourchette d'embrayage agissant elle-même sur une butée de débrayage propre à agir sur le dispositif débrayeur de l'embrayage, usuellement l'extrémité interne des doigts d'un diaphragme.

Lorsque le véhicule roule, la butée d'embrayage n'oppose plus d'effort au piston que comporte usuellement le récepteur hydraulique et la pression à l'intérieur de la canalisation hydraulique est faible.

Le dispositif de commande n'a plus d'effort et de mouvement à transmettre et est alors en équilibre. Il est alors possible de faire une mise à l'air libre, communément appelée mise à la bâche, permettant, d'une part, de s'affranchir de l'usure éventuelle du disque de friction, que comporte l'embrayage et, d'autre part, de s'affranchir d'une variation possible du volume du liquide contenu dans la canalisation, suite à une variation de température depuis la dernière opération de mise à la bâche. Cette opération est effectuée grâce à l'électrovanne précitée.

Lors d'une opération de débrayage (passage de la configuration d'engagement à la configuration de dégagement) l'électrovanne est fermée et le piston du récepteur pousse et déplace la fourchette d'embrayage, qui manoeuvre alors la butée de débrayage. Lors d'une opération inverse d'embrayage, l'électrovanne est fermée et ledit piston retient la fourchette d'embrayage.

Le dispositif fonctionne correctement tant que la variation de température ambiante sous le capot du véhicule ne provoque pas de dilatation ou de contraction notable dans une phase de roulage du véhicule ou l'embrayage n'irait jamais jusqu'à la position tout embrayée (configuration d'engagement).

Une contraction de la colonne de liquide contenu dans la canalisation provoque un mouvement d'embrayage (passage de la configuration de dégagement à la configuration d'engagement).

Une dilatation de la colonne de liquide dans la canalisation hydraulique provoque un mouvement de débrayage (passage de la configuration d'engagement à la configuration de dégagement).

Le risque dans ce cas est que la dilatation soit telle, que pour une position donnée du piston de l'actionneur, dit piston émetteur, la position du récepteur et donc de la fourchette de débrayage et de la butée de débrayage soit trop déphasée.

Les moyens d'assistance seraient alors imparfaits et la performance du moteur électrique dégradée.

La dilatation peut être telle, si la variation de température atteint 100° par exemple, que la course totale de débrayage peut être accomplie.

Le dispositif se retrouverait alors en configuration d'engagement vu de l'émetteur et en configuration de dégagement vu du récepteur.

L'invention a pour objet un dispositif de commande apte à permettre de corriger une telle dérive et un procédé propre à sa mise en oeuvre.

Ce dispositif de commande, qui est du genre comportant un actionneur relié à un récepteur par une canalisation hydraulique, ledit actionneur comportant lui-même un piston, qui, sous le contrôle d'un moteur électrique, lui-même sous le contrôle d'une unité de pilotage, est apte à intervenir sur cette canalisation hydraulique, avec, en dérivation sur cette canalisation hydraulique, une électrovanne de mise à la bâche contrôlant sa liaison à un réservoir de fluide hydraulique, ladite électrovanne étant normalement ouverte pour la configuration d'engagement de l'embrayage et fermée pour le passage de l'embrayage de sa configuration d'engagement à sa configuration de dégagement et vice versa, est d'une manière générale caractérisé en ce qu'il comporte un capteur de position, qui, associé à l'actionneur, est sensible à la position du piston, que comporte celui-ci, et un capteur de position, qui, associé au récepteur, est sensible à la position de l'organe de sortie de celui-ci, en ce que les informations délivrées par ces capteurs de position sont dirigées vers l'unité de pilotage, et en ce que, si, pour la configuration de dégagement de l'embrayage, il est constaté une dérive de la position de l'organe de sortie du récepteur par rapport à celle du piston de l'actionneur, on fait assurer, sous le contrôle de l'unité de pilotage, un cycle de correction au cours duquel on ouvre brièvement l'électrovanne de mise à la bâche pour enlever du liquide de la canalisation hydraulique.

Ainsi, l'organe de sortie du récepteur reste en permanence convenablement positionné par rapport au piston de l'actionneur.

Dans une forme de réalisation une électrovanne d'isolement est interposée sur la canalisation hydraulique.

Dès lors, si, pour la configuration de dégagement de l'embrayage, il est constaté une dérive entre la position de l'organe de sortie du récepteur du piston de l'actionneur, on fait assurer, suivant l'invention, par l'unité de pilotage, un cycle de correction au cours duquel, successivement, tout d'abord, l'électrovanne d'isolement étant fermée et l'électrovanne de mise à la bâche étant ouverte, le piston de l'actionneur est éventuellement d'abord déplacé dans un sens, qui est celui correspondant au passage en configuration d'engagement de l'embrayage, puis l'électrovanne de mise à la bâche étant à son tour fermée, ce piston est déplacé dans le sens opposé au précédent, qui est celui correspondant au passage en configuration de dégagement de l'embrayage, et, enfin, l'électrovanne d'isolement étant à nouveau ouverte, l'organe de sortie du récepteur est recentré par rapport à ce piston.

Les caractéristiques et avantages de l'invention ressortiront d'ailleurs de la description qui va suivre, à titre d'exemple, en référence aux dessins schématiques annexés sur lesquels :
- la figure 1 est une vue en perspective d'un dispositif de commande suivant l'invention, représenté en place, dans l'environnement d'un moteur de véhicule automobile dont l'embrayage est à commander ;
- la figure 2 est, avec un arrachement local, un bloc diagramme de ce dispositif de commande ;
- les figures 3A, 3B, 3C, 3D, 3E et 3F sont des blocs diagrammes qui, dérivés de celui de la figure 2, illustrent diverses phases de mise en oeuvre du dispositif de commande suivant l'invention ;
- les figures 4 et 5 sont des vues analogues aux figures 1 et 2 pour un second exemple de réalisation.

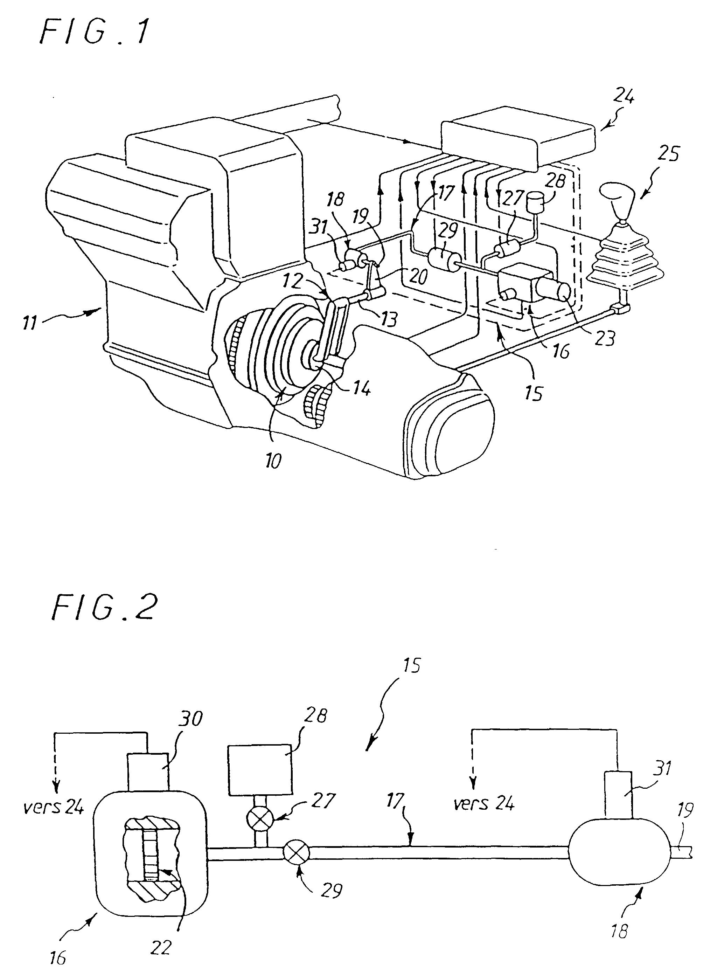

Tel qu'illustré sur la figure 1, il s'agit d'assurer la commande de l'embrayage 10 d'un moteur 11, en pratique un moteur de véhicule automobile.

Il s'agit donc, plus précisément, d'agir sur la fourchette de débrayage 12 qui, calée en rotation sur un axe 13 monté rotatif, porte, à son extrémité, sur la butée de débrayage 14 pilotant l'embrayage 10.

Ici l'embrayage 10 est supposé comporter un disque de friction équipé de garnitures de frottement.

Il est également supposé être normalement en configuration d'engagement, avec les garnitures de frottement de son disque de friction serrées entre un plateau de pression et un plateau de réaction.

Le dispositif de commande 15 mis en oeuvre pour la commande de l'embrayage 10 comporte un actionneur 16, qui, par une canalisation hydraulique 17, est relié à un récepteur 18 apte à agir sur la fourchette de débrayage 12 par un organe de sortie 19.

Par exemple, le récepteur 18 est du type hydraulique et consiste en un vérin hydraulique dont la tige de piston forme l'organe de sortie 19.

Ici, cet organe de sortie 19 est attelé à un levier 20 calé en rotation sur l'axe 13 sur lequel est également calée en rotation la fourchette de débrayage 12.

L'actionneur 16 est par exemple du type de celui décrit dans les documents FR-A-2 523 743, 2 564 920 et 2 541 793 et FR 94 07518 du 20 juin 1994.

Cet actionneur 16 étant ainsi bien connu par lui-même, et ne relevant pas en propre de la présente invention, il ne sera pas décrit dans tous ses détails ici.

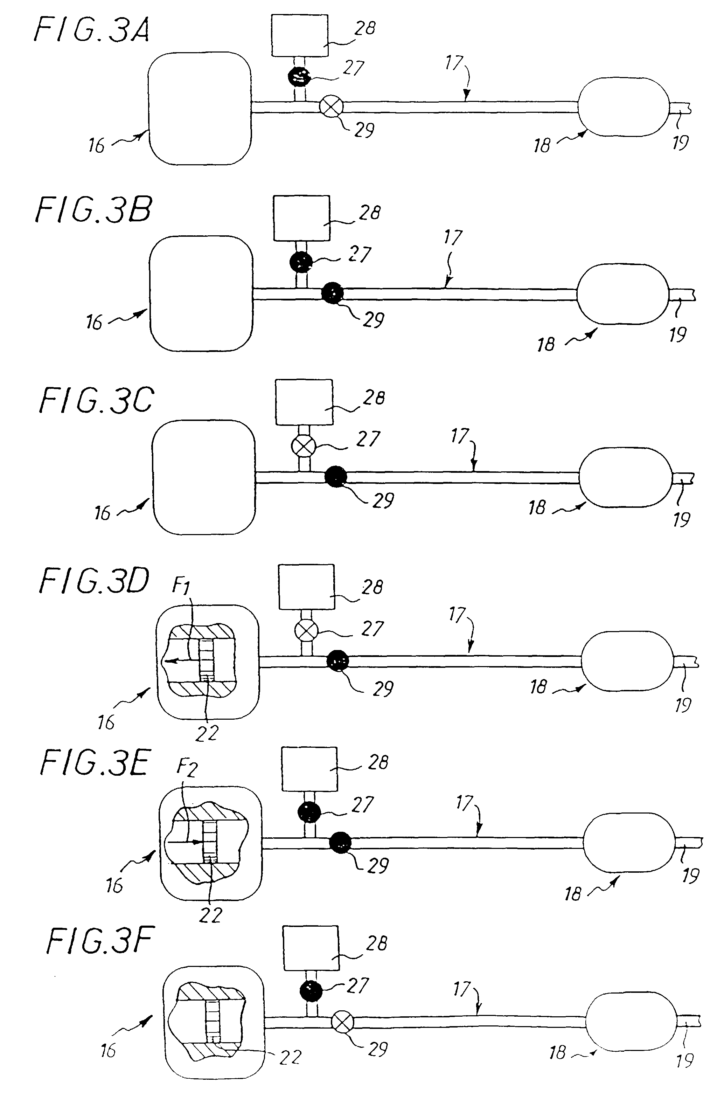

Il suffira d'indiquer que, tel que schématisé à la faveur d'un arrachement sur les figures 2, 3D, 3E et 3F, il comporte, intérieurement, à la manière d'un vérin hydraulique, un piston 22, qui, sous le contrôle d'un moteur électrique 23 lui-même sous le contrôle d'une unité de pilotage 24 sensible à toute intervention sur le levier de débrayage 25 à la disposition de l'usager, et en association avec des moyens élastiques d'assistance non visibles sur les figures, est apte à intervenir sur la canalisation hydraulique 17, par refoulement ou aspiration de liquide dans celle-ci, autrement dit par poussée ou retenue de la colonne de liquide de la canalisation 17.

Ici l'actionneur est du type compact et comprend un moteur électrique dont l'axe de sortie est en forme de vis et entraîne un écrou transformant un mouvement rotatif en mouvement linéaire. Cet écrou est lié par un moyen approprié au piston d'un émetteur hydraulique formant un élément de sortie pour l'ensemble.

Il comprend également des moyens élastiques d'assistance, qui, en parallèle vis-à-vis du moteur, agissent sur le système vis-écrou.

En outre il est prévu des moyens mécaniques de compensation qui assurent une modulation contrôlée de l'action desdits moyens élastiques d'assistance sur un des organes de ladite transmission.

Lesdits moyens comportent au moins un train de galets.

Pour plus de précision on se reportera au susmentionné document FR 94 07518.

L'unité de pilotage 24 ne sera pas non plus décrite ici ; il suffira d'indiquer qu'elle comporte un calculateur électronique qui reçoit des informations sur divers paramètres et intervient en conséquence.

En dérivation sur la canalisation hydraulique 17, une électrovanne de mise à la bâche 27, qui est elle aussi sous le contrôle de l'unité de pilotage 24, contrôle la liaison de cette canalisation hydraulique 17 à un réservoir de fluide hydraulique 28.

Suivant une caractéristique de cette première forme de réalisation, sur la canalisation hydraulique 17 est interposée une électrovanne d'isolement 29, entre l'actionneur 16 et le récepteur 18, et, plus précisément, entre le raccordement de l'électrovanne de mise à la bâche 27 à la canalisation hydraulique 17 et le récepteur 18.

Comme l'électrovanne de mise à la bâche 27, cette électrovanne d'isolement 29 est sous le contrôle de l'unité de pilotage 24.

Le dispositif de commande 15 suivant l'invention comporte, en outre, un capteur de position 30, qui, associé à l'actionneur 16, est sensible à la position du piston 22 que comporte celui-ci, et un capteur de position 31, qui, associé au récepteur 18, est sensible, lui, à la position de l'organe de sortie 19 de ce récepteur 18.

Ces capteurs de position peuvent consister en des capteurs potentiométriques rotatifs, linéaires, ou autres dispositifs.

Les informations délivrées par ces capteurs de position 30 et 31 sont dirigées, avec d'autres, sur l'unité de pilotage 24.

Pour mémoire on notera que ces autres informations consistent par exemple en la vitesse de rotation du moteur du véhicule, en la vitesse de rotation de l'arbre d'entrée de la boîte de vitesses, en la position du levier de débrayage 25 et en la position de la pédale d'accélérateur.

Sur les figures 2, 3A, 3B, 3C, 3D, 3E et 3F, et de manière conventionnelle, les électrovannes de mise à la bâche 27 et d'isolement 29 ont été laissées en clair, avec une croix en X, lorsqu'elles sont ouvertes, et elles ont été surchargées en noir, lorsqu'elles sont fermées.

Par construction, les dispositions sont telles que, pour la configuration d'engagement de l'embrayage 10, on maintient ouvertes, par l'unité de pilotage 24, tant l'électrovanne de mise à la bâche 27 que l'électrovanne d'isolement 29, tel que représenté à la figure 2.

Tout éventuelle dilatation, ou contraction, du liquide contenu dans l'ensemble du dispositif de commande 15 est absorbée, ou compensée, par le réservoir de fluide hydraulique 28, à travers l'électrovanne de mise à la bâche 27.

Conjointement, et de la même façon, les effets dûs à une éventuelle usure des garnitures de frottement du disque de friction de l'embrayage 10 se trouvent systématiquement rattrapés, la variation de la longueur de la colonne de liquide qui en résulte pour la canalisation hydraulique 17, en l'espèce une diminution si l'embrayage 10 est de type poussé et une augmentation s'il est de type tiré, se trouvant compensée par le réservoir de fluide hydraulique 28 au fur et à mesure de son développement.

Pour le passage de l'embrayage 10 de sa configuration d'engagement à sa configuration de dégagement, on ferme, par l'unité de pilotage 24, l'électrovanne de mise à la bâche 27, comme représenté sur la figure 3A, dès qu'une action intervient dans ce sens sur le levier de débrayage 25.

Une fois l'embrayage 10 en configuration de dégagement, on ferme, à son tour, par l'unité de pilotage 24, l'électrovanne d'isolement 29, comme représenté sur la figure 3B, et on ouvre l'électrovanne de mise à la bâche 27, comme représenté sur la figure 3C.

Du côté du récepteur 18, la colonne de liquide dans la canalisation hydraulique 17 se trouve bloquée par l'électrovanne d'isolement 29, en sorte que, à ses éventuelles variations de volume, négligeables, près, l'organe de sortie 19, et, donc, la butée de débrayage 14, restent dans la position qui leur a été précédemment imprimée.

Du côté de l'actionneur 16, tout éventuelle dilatation, ou contraction, du liquide se trouve comme précédemment absorbée, ou compensée, par le réservoir de fluide hydraulique 28, à travers l'électrovanne de mise à la bâche 27.

Pour toutes les configurations de l'embrayage 10 intermédiaires entre sa configuration d'engagement et sa configuration de dégagement, on maintient, normalement, par l'unité de pilotage 24, ouverte l'électrovanne d'isolement 29, et fermée l'électrovanne de mise à la bâche 27, comme représenté sur la figure 3A.

Si, pour la configuration de dégagement de l'embrayage 10, il est constaté, par les capteurs de position 30,31, une dérive entre la position de l'organe de sortie 19 du récepteur 18 par rapport à celle du piston 22 de l'actionneur 16, ou, autrement dit, si la butée de débrayage 14 n'est pas dans la position théorique dans laquelle elle devrait être eu égard à la position réelle à cet instant du piston 22 de l'actionneur 16, on fait assurer, systématiquement, par l'unité de pilotage 24, un cycle de correction propre à conduire à l'annulation de cette dérive, et, ainsi, au recentrage de l'organe de sortie 19 du récepteur 18 par rapport au piston 22 de l'actionneur 16.

Au cours de ce cycle de correction, et successivement, partant de la configuration suivant laquelle, tel que schématisé à la figure 3D, l'électrovanne d'isolement 29 est fermée tandis que l'électrovanne de mise à la bâche 27 est ouverte, le piston 22 de l'actionneur 16 est éventuellement d'abord déplacé dans un sens, qui, tel que schématisé par la flèche F1 sur la figure 3D, est celui correspondant au passage en configuration d'engagement de l'embrayage 10.

Il en résulte une augmentation de la longueur de la colonne de liquide dans la canalisation hydraulique 17 du côté de l'actionneur 16, ce qui permet avantageusement de disposer ultérieurement en toute sûreté de suffisamment de liquide dans cette dernière.

L'électrovanne de mise à la bâche 27 est à son tour fermée, tel que représenté sur la figure 3E, et, tel que schématisé par la flèche F2 sur cette figure 3E, le piston 22 de l'actionneur 16 est ensuite déplacé dans le sens opposé au précédent, qui est celui correspondant à un passage en configuration de dégagement de l'embrayage 10, pour une remise en pression du liquide dans la canalisation hydraulique 17, et ainsi éviter que celle-ci soit ultérieurement le siège d'un éventuel coup de bélier à l'ouverture de l'électrovanne d'isolement 29.

Enfin, après cette précaution, cette électrovanne d'isolement 29 est à nouveau ouverte, tel que représenté à la figure 3F, et l'organe de sortie 19 du récepteur 18 est alors dûment recentré par rapport au piston 22 de l'actionneur 16.

Comme indiqué précédemment, les diverses opérations ainsi assurées lors d'un cycle de correction se déroulent automatiquement, sous le contrôle de l'unité de pilotage 24 celle-ci étant dûment établie et programmée en conséquence.

En pratique, le moteur électrique 23 de l'actionneur 16 fait en sorte que, sous le contrôle de l'unité de pilotage 24, les capteurs de position 30 et 31 donnent des informations qui soient en corrélation l'une avec l'autre.

Bien entendu, la présente invention ne se limite pas à la forme de réalisation décrite et représentée, mais englobe toute variante d'exécution.

En particulier, le déplacement initial du piston de l'actionneur dans le sens correspondant au passage en configuration d'engagement de l'embrayage, tel que décrit ci-dessus en référence à la figure 3D, peut ne pas être nécessaire, suivant le type d'électrovanne de mise à la bâche mise en oeuvre.

Il n'a été prévu ici que pour pallier les conséquences d'une évacuation préalable trop importante de liquide vers la bâche par les passages de cette électrovanne.

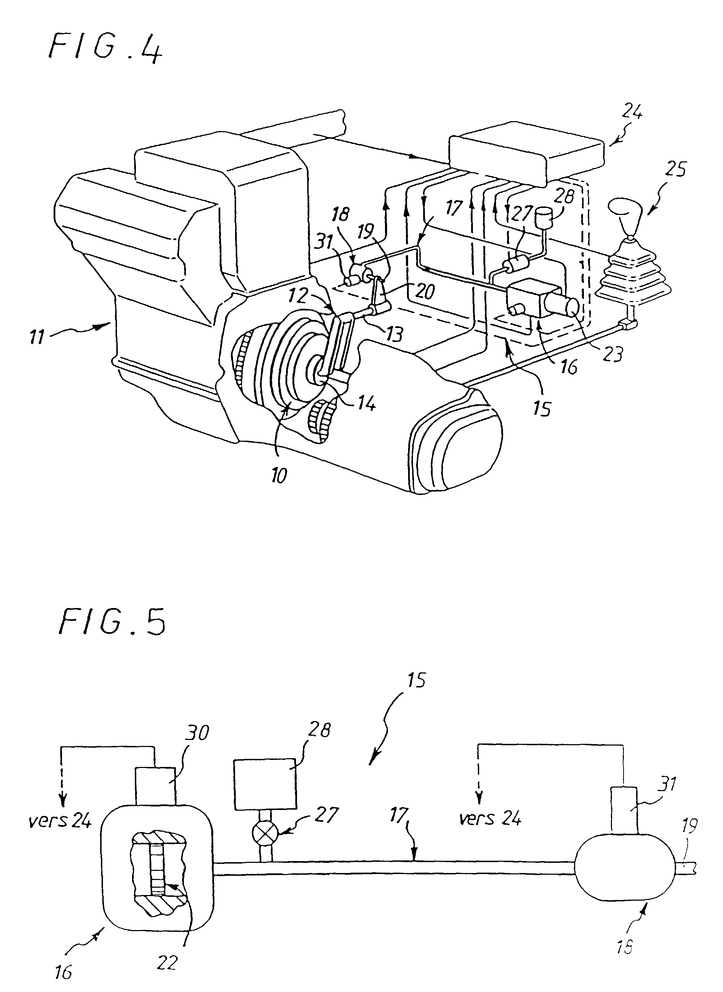

Bien entendu il est possible de supprimer l'électrovanne d'isolement 29 comme visible dans les figures 4 et 5 dans lesquelles les éléments communs à cette figure et à ceux des figures 1 à 3 seront affectés par les mêmes signes de référence.

Dans ces figures la canalisation hydraulique 17 relie directement l'actionneur 16, plus précisément l'émetteur de celui-ci comportant le piston 22, au récepteur 18.

Comme à la figure 1 le dispositif de commande comporte un capteur de position, qui, associé à l'actionneur 16, est sensible à la position du piston 22, et un capteur de position 31, qui, associé au récepteur 18, est sensible à la position de l'organe de sortie 19 de celui-ci.

Pour la configuration d'engagement de l'embrayage, on maintient ouverte l'électrovanne de mise à la bâche 27 montée en dérivation sur la canalisation hydraulique 17.

Les informations délivrées par ces capteurs 30,31, par exemple du type potentiométrique rotatif, linéaire ou autres, sont dirigées sur l'unité de pilotage 24 recevant d'autres informations comme à la figure 1 et notamment des informations relatives à la position du levier de débrayage 25.

Si pour la configuration de dégagement de l'embrayage 10, il est constaté une dérive de la position de l'organe de sortie 19 du récepteur 18 par rapport à celle du piston 22 de l'actionneur 16, on fait assurer, sous le contrôle de l'unité de pilotage 24, un cycle de correction au cours duquel on ouvre brièvement l'électrovanne de mise à la bâche 27.

Plus précisément à l'initialisation d'une session dite de roulage c'est-à-dire le temps de roulage entre le démarrage du moteur thermique du véhicule automobile et la coupure du contact de ce véhicule, la position de l'organe de sortie 19 du récepteur, dite MB, est mémorisée par l'unité de pilotage 24 (le calculateur de celle-ci) quand le piston 22 de l'actionneur 16 a été stabilisé à la position de configuration de dégagement de l'embrayage 10 appelée PT.

Cette position PT est fixe et repérable pour toute la session de roulage à venir.

A chaque fois que le dispositif débrayera (passage de la configuration d'engagement à la configuration de dégagement) le calculateur 24 (l'unité de pilotage) vérifiera pour cette même position PT que la valeur courante lue au niveau de l'organe de sortie 19 du récepteur 18 est identique à celle de la position MB.

Dès que la différence entre la valeur courante lue au récepteur 18 (au niveau de l'organe de sortie 19) et celle de la position MB reflète une dilatation, le calculateur 24 va entamer une action de correction pour ramener la butée de débrayage à la position d'origine MB.

Pour corriger la dilatation on enlève du liquide. Le procédé employé consiste comme précité à ouvrir l'électrovanne de mise à la bâche 27 et ce brièvement puis à vérifier après fermeture que la valeur courante lue à l'aide du capteur 31 sur l'organe de sortie 19 du récepteur a commencé à revenir à sa valeur d'origine MB de la plus petite quantité mesurable par le calculateur 24. Le cycle ouverture/fermeture de ladite électrovanne 27 est fixe. Le temps d'ouverture d'origine de l'électrovanne 27 est tel que la fuite est nulle quelles que soient les conditions thermiques.

Tant que l'organe de sortie 19 du récepteur 18 ne bouge pas, le temps d'ouverture est augmenté d'une fraction.

Dès que l'organe de sortie 19 bouge, le temps d'ouverture est gelé et le cycle ouverture/fermeture de l'électrovanne 27 est poursuivi jusqu'à ce que la dilatation soit rattrapée.

Le dispositif de commande est auto-apprentisseur.

Plus précisément à la première mise en route du dispositif de commande chez le constructeur automobile, lorsque le dispositif de commande est en configuration d'engagement de l'embrayage, avec l'électrovanne 27 ouverte permettant ainsi à l'embrayage de trouver naturellement sa position d'engagement, le calculateur 24 met en mémoire la position de l'organe de sortie 19 et donc du récepteur 18 à l'aide du capteur de position 31 associé à l'organe de sortie 19. Cette mémoire est le reflet de la position de la butée de débrayage lorsque l'embrayage est à l'état neuf.

Lors de fonctionnement ultérieur le calculateur 24 grâce au capteur 31 pourra vérifier la position courante dudit organe de sorte 19 et donc de la butée de débrayage par rapport à la mémorisation de la position de celle-ci à l'état neuf (embrayage neuf) et signaler par un moyen approprié, tel qu'une lampe témoin pilotée par le calculateur 24, que son embrayage est usé et qu'il doit être procédé à son échange.

Ainsi on émet un signal en cas d'usure de l'embrayage c'est-à-dire en cas d'usure des garnitures de friction du disque de friction que comporte l'embrayage.

Bien entendu les moyens élastiques d'assistance peuvent être intégrés à l'embrayage comme décrit dans le document FR-A-2 718 205.

Dans ce cas l'embrayage comporte un système de réglage correctif compensant automatiquement au moins l'usure des garnitures de frottement du disque d'embrayage et les moyens élastiques d'assistance sont disposés parallèlement au diaphragme, que comporte usuellement l'embrayage.

Pour plus de précision on se reportera à ce document.

## Revendications

1. Dispositif de commande pour embrayage de véhicule automobile, du genre comportant un actionneur (16) relié à un récepteur (18) par une canalisation hydraulique (17), ledit actionneur (16) comportant lui-même un piston (22), qui, sous le contrôle d'un moteur électrique (23) lui-même sous contrôle d'une unité de pilotage (24), est apte à intervenir sur ladite canalisation hydraulique (17), avec, en dérivation sur cette canalisation hydraulique (17), une électrovanne de mise à la bâche (27) contrôlant sa liaison à un réservoir de fluide hydraulique (28), ladite électrovanne (27) étant normalement ouverte pour la configuration d'engagement de l'embrayage (10) et fermée pour le passage de l'embrayage (10) de sa configuration d'engagement à sa configuration de dégagement et vice versa, caractérisé en ce qu'il comporte un capteur de position (30) qui, associé à l'actionneur (16), est sensible à la position du piston (22), que comporte celui-ci, et un capteur de position (31), qui, associé au récepteur (18), est sensible à la position de l'organe de sortie (19) de celui-ci, en ce que les informations délivrées par lesdits capteurs de position (30,31) sont dirigées vers l'unité de pilotage (24), et en ce que, si, pour la configuration de dégagement de l'embrayage (10), il est constaté une dérive de la position de l'organe de sortie (19) du récepteur (18) par rapport à celle du piston (22) de l'actionneur (16), on fait assurer, sous le contrôle de l'unité de pilotage (24), un cycle de correction au cours duquel on ouvre brièvement l'électrovanne de mise à la bâche (27) pour enlever du liquide de la canalisation hydraulique (17).

2. Dispositif de commande suivant la revendication 1, caractérisé en ce que sur la canalisation hydraulique (17), est interposée une électrovanne d'isolement (29).

3. Procédé pour la mise en oeuvre du dispositif de commande suivant la revendication 1, caractérisé en ce qu'à l'initialisation d'une session, dite de roulage, du véhicule on mémorise la position, dénommée (MB), de l'organe de sortie (19) du récepteur (18) grâce à l'unité de pilotage (24) quand le piston (22) de l'actionneur (16) a été stabilisé à la configuration de dégagement de l'embrayage (10) dénommée (PT), et en ce que à chaque fois que le dispositif de commande passera de la configuration d'engagement à la configuration de dégagement de l'embrayage (10) l'unité de pilotage (24) vérifiera pour cette même position (PT) que la valeur courante lue au niveau de l'organe de sortie (19) du récepteur (18) est identique à celle de la position (MB), et en ce que dès qu'une différence apparaît entre ladite valeur courante et celle de ladite position (MB), l'unité de pilotage (24) entamera une action de correction pour ramener l'organe de sortie (19) à la position d'origine (MB).

4. Procédé pour la mise en oeuvre du dispositif de commande suivant la revendication 2, caractérisé en ce que, pour la configuration d'engagement de l'embrayage (10) , on maintient ouvertes tant l'électrovanne de mise à la bâche (27) que l'électrovanne d'isolement (29).

5. Procédé suivant la revendication 4, caractérisé en ce que, pour le passage de l'embrayage (10) de sa configuration d'engagement à sa configuration de dégagement, on ferme l'électrovanne de mise à la bâche (27).

6. Procédé suivant la revendication 5, caractérisé en ce que, si, pour la configuration de dégagement de l'embrayage (10), il est constaté une dérive de la position de l'organe de sortie (19) du récepteur (18) par rapport à celle du piston (22) de l'actionneur (16), on fait assurer, sous le contrôle de l'unité de pilotage (24), un cycle de correction au cours duquel, successivement, tout d'abord, l'électrovanne d'isolement (29) étant fermée et l'électrovanne de mise à la bâche (27) étant ouverte, le piston (22) de l'actionneur (16) est éventuellement d'abord déplacé dans un sens, qui est celui correspondant au passage en configuration d'engagement de l'embrayage (10), puis, l'électrovanne de mise à la bâche (27) étant à son tour fermée, ce piston (22) est déplacé dans le sens opposé au précédent, qui est celui correspondant au passage en configuration de dégagement de l'embrayage (10), et enfin, l'électrovanne de l'isolement (29) étant à nouveau ouverte, l'organe de sortie (19) du récepteur (18) est recentré par rapport à ce piston (22).

7. Procédé suivant la revendication 4, caractérisé en ce que, pour toutes les configurations de l'embrayage (10) intermédiaires entre sa configuration d'engagement et sa configuration de dégagement, on maintient ouverte l'électrovanne d'isolement (29) et fermée l'électrovanne de mise à la bâche (27).

8. Procédé suivant la revendication 3, caractérisé en ce que, grâce à l'unité de pilotage (24), on mémorise la position de l'organe de sortie (19) du récepteur (18) lorsque l'embrayage est en position d'engagement à l'état neuf et ce à l'aide du capteur de position (31) associé audit organe de sortie (19) et en ce qu'ultérieurement on vérifie à l'aide dudit capteur (31) la position courante dudit organe de sortie (19), et que l'on compare à ladite position mémorisée pour émettre un signal en cas d'usure de l'embrayage.

## Patentansprüche

1. Betätigungsvorrichtung für eine Kraftfahrzeugkupplung, umfassend ein Betätigungsgerät (16), das durch eine Hydraulikleitung (17) mit einem Nehmerzylinder (18) verbunden ist, wobei das besagte Betätigungsgerät (16) selbst einen Kolben (22) umfaßt, der unter der Kontrolle eines Elektromotors (23), der seinerseits durch eine Steuereinheit (24) kontrolliert wird, an der besagten Hydraulikleitung (17) wirksam werden kann, mit einem in Abzweigung an dieser Hydraulikleitung (17) vorgesehenen Ablaßmagnetventil (27), das ihre Verbindung mit einem Hydraulikflüssigkeitsbehälter (28) kontrolliert, wobei das besagte Magnetventil (27) normalerweise bei der Einrückkonfiguration der Kupplung (10) geöffnet ist und beim Übergang der Kupplung (10) von ihrer Einrückkonfiguration zu ihrer Ausrückkonfiguration und umgekehrt geschlossen wird, **dadurch gekennzeichnet**, daß sie einen Positionsgeber (30), der mit dem Betätigungsgerät (16) verbunden und für die Position des Kolbens (22), den dieses umfaßt, empfindlich ist, und einen Positionsgeber (31) aufweist, der mit dem Nehmerzylinder (18) verbunden und für die Position von dessen Ausgangsorgan (19) empfindlich ist, daß die durch diese Positionsgeber (30, 31) gelieferten Informationen zur Steuereinheit (24) geleitet werden und daß, wenn bei der Ausrückkonfiguration der Kupplung (10) eine Abweichung der Position des Ausgangsorgans (19) des Nehmerzylinders (18) im Verhältnis zur Position des Kolbens (22) des Betätigungsgeräts (16) festgestellt wird, unter der Kontrolle der Steuereinheit (24) die Ausführung eines Korrekturzyklus veranlaßt wird, in dessen Verlauf das Ablaßmagnetventil (27) kurz geöffnet wird, um Flüssigkeit aus der Hydraulikleitung (17) zu entnehmen.

2. Betätigungsvorrichtung nach Anspruch 1, **dadurch gekennzeichnet,** daß an der Hydraulikleitung (17) ein Absperrmagnetventil (29) eingefügt ist.

3. Verfahren zur Anwendung der Betätigungsvorrichtung nach Anspruch 1, **dadurch gekennzeichnet** , daß bei der Initialisierung einer sogenannten Fahrsitzung des Fahrzeugs die mit (MB) bezeichnete Position des Ausgangsorgans (19) des Nehmerzylinders (18) durch die Steuereinheit (24) gespeichert wird, wenn der Kolben (22) des Betätigungsgeräts (16) bei der mit (PT) bezeichneten Ausrückkonfiguration der Kupplung (10) stabilisiert wurde, und daß jedesmal, wenn die Betätigungsvorrichtung von der Einrückkonfiguration zur Ausrückkonfiguration der Kupplung (10) übergeht, die Steuereinheit (24) zu ebendieser Position (PT) überprüft, ob der am Ausgangsorgan (19) des Nehmerzylinders (18) gelesene aktuelle Wert mit dem Wert der Position (MB) identisch ist, und daß, sobald ein Unterschied zwischen dem besagten aktuellen Wert und dem Wert der besagten Position (MB) auftritt, die Steuereinheit (24) einen Korrekturvorgang einleitet, um das Ausgangsorgan (19) zur ursprünglichen Position (MB) zurückzubringen.

4. Verfahren zur Anwendung der Betätigungsvorrichtung nach Anspruch 2, **dadurch gekennzeichnet** , daß bei der Einrückkonfiguration der Kupplung (10) sowohl das Ablaßmagnetventil (27) als auch das Absperrmagnetventil (29) geöffnet gehalten werden.

5. Verfahren nach Anspruch 4, **dadurch gekennzeichnet** , daß beim Übergang der Kupplung (10) von ihrer Einrückkonfiguration zu ihrer Ausrückkonfiguration das Ablaßmagnetventil (27) geschlossen wird.

6. Verfahren nach Anspruch 5, **dadurch gekennzeichnet** , daß, wenn bei der Ausrückkonfiguration der Kupplung (10) eine Abweichung der Position des Ausgangsorgans (19) des Nehmerzylinders (18) im Verhältnis zur Position des Kolbens (22) des Betätigungsgeräts (16) festgestellt wird, unter der Kontrolle der Steuereinheit (24) ein Korrekturzyklus veranlaßt wird, in dessen Verlauf nacheinander als erstes bei geschlossenem Absperrmagnetventil und bei geöffnetem Ablaßmagnetventil (27) der Kolben (22) des Betätigungsgeräts (16) gegebenenfalls zunächst in einer Richtung verschoben wird, die dem Übergang zur Einrückkonfiguration der Kupplung (10) entspricht, woraufhin dieser Kolben (22) nach dem Schließen des Ablaßmagnetventils (27) in der entgegengesetzten Richtung verschoben wird, die dem Übergang zur Ausrückkonfiguration der Kupplung (10) entspricht, und schließlich nach dem erneuten Öffnen des Absperrmagnetventils (29) das Ausgangsorgan (19) des Nehmerzylinders (18) im Verhältnis zu diesem Kolben (22) neuzentriert wird.

7. Verfahren nach Anspruch 4, **dadurch gekennzeichnet** , daß bei allen Zwischenkonfigurationen der Kupplung (10) zwischen ihrer Einrückkonfiguration und ihrer Ausrückkonfiguration das Absperrmagnetventil (29) geöffnet und das Ablaßmagnetventil (27) geschlossen gehalten wird.

8. Verfahren nach Anspruch 3, **dadurch gekennzeichnet** , daß dank der Steuereinheit (24) die Position des Ausgangsorgans (19) des Nehmerzylinders (18) gespeichert wird, wenn sich die Kupplung im Neuzustand in Einrückposition befindet, und zwar mit Hilfe des Positionsgebers (31), der mit dem besagten Ausgangsorgan (19) verbunden ist, und daß in der Folge mit Hilfe des besagten Positionsgebers (31) die aktuelle Position des besagten Ausgangsorgans (19) überprüft und mit der besagten abgespeicherten Position verglichen wird, um bei einem Verschleiß der Kupplung ein Signal auszugeben.

## Claims

1. A control system for a motor vehicle clutch, of the kind comprising an actuator (16) coupled to a receiver (18) through an hydraulic duct (17), the said actuator (16) itself comprising a piston (22) which, under the control of an electric motor (23), which is itself under the control of a control unit (24), is adapted to act on the said hydraulic duct (17), with, branched on the said hydraulic duct (17), an electrical dump valve (27) controlling its connection to an hydraulic fluid reservoir (28), the said electrical valve being normally open in the engaged configuration of the clutch (10) and closed for movement of the clutch (10) from its engaged configuration to its disengaged configuration and vice versa, characterised in that it includes a position sensor (30) which, being associated with the actuator (16), is sensitive to the position of the piston (20) that is part of the latter, and a position sensor (31) which, being associated with the receiver (18) is sensitive to the position of the output member (19) of the latter, in that the information delivered from the said position sensors (30, 31) are directed towards the control unit (24), and in that, if, in the disengaged configuration of the clutch (10), a quantity derived from the position of the output member (19) of the receiver (18) with respect to that of the piston (22) of the actuator (16) is found, then under the control of the control unit (24), a correction cycle is carried out in the course of which the dump valve (27) is briefly opened so that liquid is taken from the hydraulic duct (17).

2. A control system according to Claim 1,
characterised in that an electrical isolating valve (29) is interposed in the hydraulic duct (17).

3. A method for operating the control system according to Claim 1, characterised in that, on commencement of a so-called rolling session of the vehicle, the position denoted (MB) of the output member (19) of the receiver (18) is memorised by the control unit (24) when the piston (22) of the actuator (16) has been stabilised in the disengaged configuration of the clutch (10) denoted (PT), and in that, each time the control system passes from the engaged configuration to the disengaged configuration of the clutch (10), the control unit (24) will verify for this position (PT) that the prevailing value read at the output member (19) of the receiver (18) is identical to that of the position (MB), and in that, once a difference has appeared between the said prevailing value and that of the said position (MB), the control unit (24) will institute a corrective action for return of the output member (19) to its original position (MB).

4. A method for operating the control system according to Claim 2, characterised in that, for the engaged configuration of the clutch (10), both the dump valve (27) and the isolating valve (29) are held open.

5. A method according to Claim 4, characterised in that, for movement of the clutch (10) from its engaged configuration to its disengaged configuration, the dump valve (27) is closed.

6. A method according to Claim 5, characterised in that, if, for the disengaged configuration of the clutch (10), a quantity derived from the position of the output member (19) of the receiver (18) with respect to that of the piston (22) of the actuator (16) is found, then, under the control of the control system (24), a corrective cycle is carried out in the course of which, in succession, firstly, with the isolating valve (29) being closed and the dump valve (27) being open, the piston (22) of the actuator (16) is, optionally, first displaced in one direction which is that corresponding to movement of the clutch (10) to its engaged configuration, and then, with the dump valve (27) being closed in its turn, the piston (22) is displaced in the direction opposite to the foregoing direction which is that corresponding to movement of the clutch (10) into its disengaged configuration, and finally, the isolating valve (29) being once again open, the output member (19) of the receiver (18) is re-centred with respect to the piston (22).

7. A method according to Claim 4, characterised in that, in all configurations of the clutch (10) between its engaged configuration and its disengaged configuration, the isolating valve (29) is kept open and the dump valve (27) is kept closed.

8. A method according to Claim 3, characterised in that, by virtue of the control unit (24), the position of the output member (19) of the receiver (18) is memorised when the clutch is new and is in its engaged condition, this being effected with the aid of the position sensor (31) associated with the said output member (19), and in that, subsequently, using the said sensor (31), the prevailing position of the said output member (19) is verified and compared with the said memorised position so that a signal is emitted in the event of wear in the clutch.
